# EUROPEAN PATENT SPECIFICATION

(11) **EP 2 768 050 B1**
(45) Date of publication and mention of the grant of the patent: **21.02.2018**
(21) Application number: 12839695.9
(22) Date of filing: 21.09.2012
(51) Int. Cl.: H01M 4/48, H01G 11/22, C01B 33/113, H01G 11/46, H01M 4/04, H01M 4/1391, H01M 4/36, H01M 4/62, H01M 4/587, H01M 10/052

(54) **SILICON OXIDE FOR NONAQUEOUS ELECTROLTYE SECONDARY BATTERY NEGATIVE ELECTRODE MATERIAL, METHOD FOR MANUFACTURING THE SAME, LITHIUM ION SECONDARY BATTERY, AND ELECTROCHEMICAL CAPACITOR**
SILICIUMOXID FÜR EIN NICHTWÄSSRIGESELEKTROLYTSEKUNDÄRZELLE NEGATIVELEKTRODENMATERIAL, HERSTELLUNGSVERFAHREN DAFÜR, LITHIUMIONEN-SEKUNDÄRZELLE UND ELEKTROCHEMISCHER KONDENSATOR
OXYDE DE SILICIUM DESTINÉ À UNE MATIÈRE D'ÉLECTRODE NÉGATIVE D'UNE PILE RECHARGEABLE À ÉLECTROLYTE NON AQUEUX, SON PROCÉDÉ DE PRODUCTION, PILE RECHARGEABLE AU LITHIUM-ION ET CONDENSATEUR ÉLECTROCHIMIQUE

(30) Priority: 14.10.2011 JP 2011227079
(43) Date of publication of application: 20.08.2014
(73) Proprietor: Shin-Etsu Chemical Co., Ltd., Tokyo 100-0004 (JP)
(72) Inventor: FUKUOKA, Hirofumi, Annaka-shi Gunma 379-0224 (JP); UENO, Susumu, Annaka-shi Gunma 379-0195 (JP)
(74) Representative: Wibbelmann, Jobst
(86) International application number: PCT/JP2012/006015
(87) International publication number: WO 2013/054476

(56) References cited:
- WO-A1-2011/118387
- JP-A- 2003 119 017
- JP-A- 2003 317 717
- JP-A- 2004 047 404
- JP-A- 2004 063 433
- JP-A- 2007 053 084
- JP-A- 2008 084 842
- JP-A- 2008 098 151
- JP-A- 2008 098 151
- JP-A- 2011 192 453

## Description

### BACKGROUND OF THE INVENTION

### 1. Field of the Invention

The present invention relates to a silicon oxide for a non-aqueous electrolyte secondary battery negative electrode material which is used as a negative electrode active material for a lithium ion secondary battery to impart a high capacity and a good cycle characteristics, a method for manufacturing the same, and a lithium ion secondary battery and a electrochemical capacitor using the same.

### 2. Description of the Related Art

In recent years, with the rapid development of portable electronic equipment and communication equipment, a non-aqueous electrolyte secondary battery having a high energy density is strongly desired from the viewpoints of economy and a reduction in the size and the weight of the equipment. As means for increasing the capacity of this kind of non-aqueous electrolyte secondary battery, a method using an oxide of element such as B, Ti, V, Mn, Co, Fe, Ni, Cr, Nb, and Mo, or a complex oxide thereof for a negative electrode material (Patent Documents 1 and 2), a method using a melt quenched M₁₀₀₋ₓSiₓ, wherein x is more than 50at% and M is Ni, Fe, Co, or Mn, for a negative electrode (Patent Document 3), a method using a silicon oxide for a negative electrode material (Patent Document 4), and a method using Si₂N₂O, Ge₂N₂O, and Sn₂N₂O for a negative electrode material (Patent Document 5) have been conventionally known.

JP 2004-047404 A discloses that a surface of a silicon oxide powder is coated with the carbon by chemical vapor depositing with an organic gas at a temperature of 500 to 1200°C.

WO 2011/118387 A1 discloses that a surface of a silicon oxide powder which is expressed by a general formula of SiO, is coated with a carbon by performing a CVD process in an atmosphere of methane at a temperature of 1150°C.

JP 2008-098151 A discloses that a surface of a silicon oxide powder is coated with a carbon by performing a thermal CVD in an atmosphere of mixed gas of methane and argon at a temperature of 1150°C.

Patent Document 1: Japanese Patent No. 3008228
Patent Document 2: Japanese Patent No. 3242751
Patent Document 3: Japanese Patent No. 3846661
Patent Document 4: Japanese Patent No. 2997741
Patent Document 5: Japanese Patent No. 3918311

### SUMMARY OF THE INVENTION

Among the above materials, a silicon oxide is expressed by SiOₓ, wherein x is slightly larger than a theoretical value of 1 due to covered oxide film. From the analysis of X-ray diffraction, it is confirmed that the silicon oxide has a structure in which amorphous silicons having a size of several nanometers to several tens of nanometers are finely dispersed in silica. For this reason, the capacity of a battery using the silicon oxide is lower than the capacity of a battery using silicon, but five to six times per weight higher than the capacity of a battery using carbon. Further, the volume expansion of the battery is low, and the cycle characteristics are comparatively excellent. Therefore, the silicon oxide has been considered to be a negative electrode material close to practical application.

However, when the battery is used for an automobile, the cycle characteristics are insufficient. Therefore, it is necessary that the battery using the silicon oxide has the same cycle characteristics as in a current battery using a carbon material as a negative electrode material.

The present invention is made in view of the above-described problems. An object of the present invention is to provide a silicon oxide which is used as a negative electrode to produce a non-aqueous electrolyte secondary battery having excellent cycle characteristics and a high capacity, a method for manufacturing the same, and a lithium ion secondary battery and an electrochemical capacitor using the same.

In order to achieve the object, the present invention provides a silicon oxide for a non-aqueous electrolyte secondary battery negative electrode material, wherein the silicon oxide is a carbon-containing silicon oxide obtained by codeposition from a SiO gas and a carbon-containing gas, and the carbon-containing silicon oxide has a carbon content of 0.5 to 30%.

When such a carbon-containing silicon oxide is used for a negative electrode material, a non-aqueous electrolyte secondary battery having a high capacity and excellent cycle characteristics can be manufactured. Thus, the above silicon oxide for a non-aqueous electrolyte secondary battery negative electrode material is of high quality.

In this case, it is preferable that carbon of the carbon-containing silicon oxide be carbon which has not been converted into silicon carbide.

When carbon of a carbon-containing silicon oxide is carbon which has not been converted into silicon carbide, such a silicon oxide becomes a silicon oxide for a negative electrode material which is capable of producing a non-aqueous electrolyte secondary battery having a sufficiently high capacity and excellent cycle characteristics.

In this case, it is preferable that the carbon-containing silicon oxide have an average particle diameter of 0.1 to 30 µm and a BET specific surface area of 0.5 to 30 m²/g.

When such a carbon-containing silicon oxide is used to manufacture a non-aqueous electrolyte secondary battery negative electrode material, the silicon oxide for a non-aqueous electrolyte secondary battery negative electrode material can achieve good adhesion in case of coating an electrode and sufficiently increase the battery capacity.

The present invention provides a method for manufacturing a silicon oxide for a non-aqueous electrolyte secondary battery negative electrode material, including heating a raw material generating a SiO gas to generate a SiO gas, and supplying the generated SiO gas with a carbon-containing gas at a temperature of 500 to 1,100°C to deposit a carbon-containing silicon oxide having a carbon content of 0.5 to 30%.

By manufacturing a carbon-containing silicon oxide in this manner, a carbon-containing silicon oxide having a carbon content of 0.5 to 30% can be deposited efficiently, and a silicon oxide capable of manufacturing a negative electrode material of a non-aqueous electrolyte secondary battery having a high capacity and excellent cycle characteristics can be manufactured with high productivity.

In this case, it is preferable that the raw material generating a SiO gas be a mixture of a silicon oxide powder or a silicon dioxide powder with a metal silicon powder.

When such a raw material is used, a SiO gas can be efficiently generated, and the productivity of a silicon oxide for a non-aqueous electrolyte secondary battery negative electrode material can be improved.

It is preferable that the raw material generating a SiO gas is heated at a temperature of 1,100 to 1,600°C in the presence of an inert gas or under reduced pressure.

When the raw material is heated as described above, a reaction efficiently proceeds to sufficiently generate a SiO gas, and the productivity of a silicon oxide for a non-aqueous electrolyte secondary battery negative electrode material can be further improved.

It is preferable that the carbon-containing gas is a hydrocarbon gas represented by CₙH₂ₙ₊₂, wherein "n" represents 1 to 3.

Since such a hydrocarbon gas is excellent in cost, a silicon oxide for a non-aqueous electrolyte secondary battery negative electrode material can be inexpensively manufactured from the hydrocarbon gas.

Further, a lithium ion secondary battery in which the silicon oxide for a non-aqueous electrolyte secondary battery negative electrode material of the present invention is used is provided.

When the silicon oxide for a non-aqueous electrolyte secondary battery negative electrode material of the present invention is used as a negative electrode material, a lithium ion secondary battery has a high capacity and excellent cycle characteristics.

Moreover, an electrochemical capacitor in which the silicon oxide for a non-aqueous electrolyte secondary battery negative electrode material of the present invention is used is provided.

When the silicon oxide for a non-aqueous electrolyte secondary battery negative electrode material of the present invention is used as a negative electrode material, an electrochemical capacitor has a high capacity and excellent cycle characteristics.

As described above, according to the present invention, there is provided a high-quality silicon oxide for a non-aqueous electrolyte secondary battery negative electrode material which is capable of manufacturing a non-aqueous electrolyte secondary battery having a high capacity and excellent cycle characteristics in case of using as a negative electrode material.

### BRIEF DESCRIPTION OF DRAWINGS

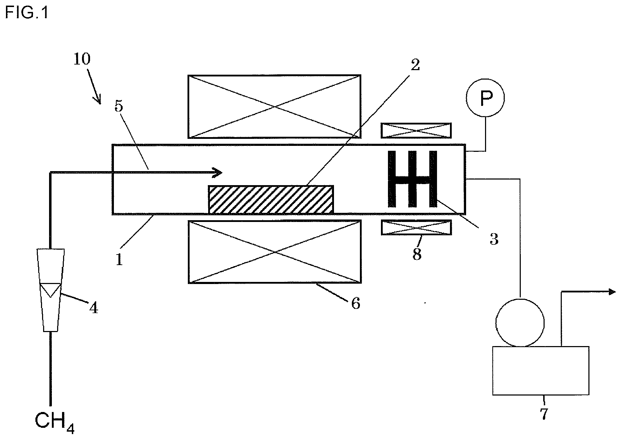

FIG. 1 is a schematic view illustrating a horizontal tubular furnace used in Examples and Comparative Examples.

### DETAILED DESCRIPTION OF THE PREFERRED EMBODIMENTS

The present inventors have focused on a silicon oxide-based negative electrode material as an active material which realizes a battery capacity higher than the capacity of a battery using a carbon material. The present inventors have investigated a silicon-based active material which can realize cycle characteristics the same as in the battery using a carbon material while the high capacity is maintained.

As a result, the present inventors have found that when a conductive network is formed on a negative electrode material of a silicon oxide which is an insulating material, the cycle characteristics are significantly improved and the object may be achieved with a high possibility. Further, the present inventors have earnestly studies a method for forming a conductive network on a negative electrode material of a silicon oxide, and as a result, found that when a carbon-containing gas is used for codeposition in case of the manufacture of a silicon oxide by the deposition from a SiO gas, a conductive carbon-containing silicon oxide can be obtained with comparative ease, and that by using such a carbon-containing silicon oxide as an active material for a non-aqueous electrolyte secondary battery negative electrode material, a non-aqueous electrolyte secondary battery having a high capacity and excellent cycle characteristics can be obtained, thereby the present invention has been completed.

Hereinafter, an embodiment of the present invention will be described in detail as an example, but the present invention is not limited to the embodiment.

A silicon oxide for a non-aqueous electrolyte secondary battery negative electrode material according to the present invention is obtained by codeposition caused by supplying a carbon-containing gas as a carbon source in case of the deposition from a SiO gas, and the carbon-containing silicon oxide has a carbon content of 0.5 to 30%.

When such a carbon-containing silicon oxide is used for a non-aqueous electrolyte secondary battery negative electrode material, a non-aqueous electrolyte secondary battery has a high capacity and excellent cycle characteristics.

When the carbon content of the carbon-containing silicon oxide of the present invention is less than 0.5%, it is not confirmed that the cycle characteristics of a non-aqueous electrolyte secondary battery using such a silicon oxide as a negative electrode material is improved as compared with a battery using a ordinary silicon oxide. In contrast, when the carbon content is more than 30%, the improvement of the cycle characteristics is confirmed, but the capacity of the battery decreases. In order to certainly improve the cycle characteristics, the carbon content is preferably 1 to 25%, and more preferably 1.5 to 20%.

Further, it is preferable that carbon of the carbon-containing silicon oxide according to the present invention is carbon which has not been converted into silicon carbide.

When carbon of the carbon-containing silicon oxide is carbon which has not been converted into silicon carbide, degradation of the battery capacity and the cycle characteristics can be reliably prevented, thereby a non-aqueous electrolyte secondary battery exhibiting excellent capacity and cycle characteristics can be manufactured.

The physical properties other than the carbon content of the carbon-containing silicon oxide in the present invention are not particularly limited, but the average particle diameter of the silicon oxide is preferably 0.1 to 30 µm, and particularly preferably 0.2 to 20 µm.

When the average particle diameter is 0.1 µm or more, and particularly 0.2 µm or more, the manufacture is easy, the specific surface area is low, and the ratio of silicon dioxide on the particle surface decreases. Therefore, the capacity of a battery using such a carbon-containing silicon oxide for a non-aqueous electrolyte secondary battery negative electrode material increases. When the average particle diameter is 30 µm or less, and particularly 20 µm or less, a foreign substance is unlikely to be generated during coating an electrode, and a decrease in the battery characteristics can be prevented.

Such an average particle diameter, for example, can be represented as the weight average particle diameter obtained in a particle size distribution measurement by a laser light diffraction method.

The BET specific surface area of the carbon-containing silicon oxide according to the present invention is preferably 0.5 to 30 m²/g, and particularly preferably 1 to 20 m²/g.

When the BET specific surface area is 0.5 m²/g or more, and particularly 1 m²/g or more, the adhesion in case of coating an electrode is good, and the battery characteristics are excellent. In contrast, when the BET specific surface are is 30 m²/g or less, and particularly 20 m²/g or less, the ratio of silicon dioxide on the particle surface decreases, and the capacity of a non-aqueous electrolyte secondary battery using such a carbon-containing silicon oxide for a negative electrode material increases.

Next, a method for manufacturing the silicon oxide for a non-aqueous electrolyte secondary battery negative electrode material of the present invention will be explained.

According to the method of the present invention, a raw material generating a SiO gas is heated to generate a SiO gas, and the generated SiO gas is supplied with a carbon-containing gas at a temperature of 500 to 1,100°C to deposit a carbon-containing silicon oxide having a carbon content of 0.5 to 30%.

According to the method of the present invention as described above, a carbon-containing silicon oxide having a carbon content of 0.5 to 30% can be efficiently deposited, and a high-quality silicon oxide for a non-aqueous electrolyte secondary battery negative electrode material can be manufactured with high productivity.

Here, the carbon content is measured, for example, by an oxygen combustion method, and specifically, an analyzer of carbon in metal EMIA-110, manufactured by Horiba, Ltd., is used as a measurement device.

Here, a SiO gas (silicon oxide gas) is obtained by heating a raw material generating a SiO gas. In this case, as the raw material generating a SiO gas, a mixture of a silicon oxide powder or a silicon dioxide powder with a powder reducing them is preferably used.

When a mixture of a silicon oxide powder or a silicon dioxide powder with a reducing powder is used, a SiO gas is sufficiently generated. Specific examples of the reducing powder may include a metal silicon compound and a carbon-containing powder. In particular, a metal silicon powder is preferably used since it is effective for (1) an increase in reactivity and (2) an increase in yield.

In this case, a mixing ratio of a metal silicon powder and a silicon dioxide powder is appropriately selected. In consideration of the presence of oxygen on the surface of the metal silicon powder and a minute amount of oxygen in a reaction furnace, it is desirable that the mixing molar ratio of the metal silicon powder to the silicon dioxide powder (mole of metal silicon powder/mole of silicon dioxide powder) is more than 1 and less than 1.1, and particularly equal to or more than 1.01 and equal to or less than 1.08.

When such a raw material is heated to generate a SiO gas, it is preferable that the raw material is heated and held at a temperature of 1,100 to 1,600°C, and particularly 1,200 to 1,500°C, to generate a SiO gas.

When the reaction temperature is 1, 100°C or higher, and particularly 1,200°C or higher, the reaction efficiently proceeds to generate a sufficient amount of SiO gas. When the reaction temperature is 1,600°C or lower, and particularly 1,500°C or lower, a sufficient amount of SiO gas is generated without melting of the raw material while a high reactivity is maintained. Further, since the temperature is not too high, a furnace material is not limited.

It is preferable that the furnace atmosphere during heating is in the presence of an inert gas or under reduced pressure. In terms of thermodynamics, it is more preferable that the atmosphere be under reduced pressure since the reactivity is high and the reaction at lower temperature is possible.

Therefore, it is particularly desirable that the raw material is heated under reduced pressure, for example, at 1 to 200 Pa, and particularly 5 to 100 Pa.

The carbon-containing gas supplied in case of the deposition from the SiO gas is not particularly limited, but as the carbon-containing gas, a hydrocarbon gas represented by CₙH₂ₙ₊₂, wherein "n" represents 1 to 3, alcohol such as methanol and ethanol, an aromatic hydrocarbon having 1 to 3 rings such as benzene, toluene, xylene, styrene, ethylbenzene, diphenyl methane, naphthalene, phenol, cresol, nitrobenzene, chlorobenzene, indene, coumarone, pyridine, anthracene, and phenanthrene, and a mixture thereof, or a mixture of one of these reducing gases and an inert gas such as an Ar gas and a He gas can be supplied.

Among them, a hydrocarbon gas represented by CₙH₂ₙ₊₂, wherein "n" represents 1 to 3, can be suitably used since it is excellent in cost.

For the deposition of carbon-containing silicon oxide, a carbon-containing gas is supplied during the deposition from the SiO gas, resulting in the codeposition on a substrate for deposition. The deposition temperature range is set to 500 to 1,100°C.

When the deposition temperature is lower than 500°C, the thermal decomposition rate of the carbon-containing gas decreases, and a silicon oxide completely free of carbon is deposited. Further, it takes a long time to manufacture a carbon-containing silicon oxide having the carbon content of the present invention. Therefore, it is not practical. In contrast, when the deposition temperature is higher than 1,100°C, SiC is manufactured by a reaction of the SiO gas with the carbon-containing gas, and battery characteristics such as capacity and cycle characteristics of a battery using such a carbon-containing silicon oxide for a negative electrode material are significantly deteriorated. In consideration of deposition efficiency, the deposition temperature is particularly preferably 700 to 1,000°C.

The temperature in a deposition chamber can be appropriately controlled by heater-heating, heat-insulating performance (thickness of heat-insulating material), or forced cooling.

The type of a substrate for deposition to deposit a carbon-containing silicon oxide is not particularly limited, but high-melting metal such as SUS, molybdenum, and tungsten is suitably used in terms of formability.

The carbon content of a carbon-containing silicon oxide to be manufactured can be easily controlled by the flow rate, the supply time, or the like of a carbon-containing gas to be supplied.

The carbon-containing silicon oxide deposited on the substrate for deposition is ground by an appropriate means, if necessary, thereby the preferable average particle diameter and BET specific surface area can be obtained.

When the silicon oxide for a non-aqueous electrolyte secondary battery negative electrode material according to the present invention, as manufactured above, is used for a negative electrode material, it is preferable that the silicon oxide for a non-aqueous electrolyte secondary battery negative electrode material obtained in the present invention be coated with carbon by chemical vapor deposition or mechanical alloying in order to increase conductivity furthermore.

In this case, a gas and/or a vapor of hydrocarbon-based compound is introduced under normal pressure or reduced pressure at a temperature of 600 to 1,200°C, and preferably 800 to 1,100°C, and publicly known thermal chemical vapor deposition or the like is carried out. Thereby, silicon composite particles in which a carbon film is formed on the particle surface of the carbon-containing silicon oxide, and at the same time, a silicon carbide layer is formed on the interface between a silicon and a carbon layer may be formed.

As the hydrocarbon-based compound, a compound which is thermally decomposed at the above thermal treatment temperature to produce carbon is selected. Examples thereof may include hydrocarbon such as methane, ethane, propane, butane, pentane, hexane, ethylene, propylene, butylene, and acetylene, a mixture thereof, alcohol such as methanol and ethanol, an aromatic hydrocarbon having 1 to 3 rings such as benzene, toluene, xylene, styrene, ethylbenzene, diphenylmethane, naphthalene, phenol, cresol, nitrobenzene, chlorobenzene, indene, coumarone, pyridine, anthracene, and phenanthrene, and a mixture thereof. Further, compound obtained by a tar distillation step such as gas light oil, creosote oil, anthracene oil, and naphtha cracked tar oil may be used alone or in a mixture thereof.

When the silicon oxide is coated with carbon, the carbon coating amount is 1 to 50% by mass, and particularly preferably 1 to 20% by mass, relative to the amount of carbon-coating silicon oxide.

As described above, the silicon oxide for a non-aqueous electrolyte secondary battery negative electrode material obtained by the present invention can be processed to produce a lithium ion secondary battery.

In this case, a lithium ion secondary battery to be produced has a feature of using the silicon oxide for a non-aqueous electrolyte secondary battery negative electrode material of the present invention. Materials for a positive electrode, an electrolyte, and a separator and a battery shape are not limited, and publicly known materials and battery shape can be used.

For example, transition metal oxides and chalcogenides such as LiCoO₂, LiNiO₂, LiMn₂O₄, V₂O₅, MnO₂, TiS₂, and MoS₂ are used as a positive electrode active material. A non-aqueous solution containing a lithium salt such as lithium perchlorate is used as the electrolyte. As a non-aqueous solvent, propylene carbonate, ethylene carbonate, dimethoxyethane, γ-butyrolactone, and 2-methyltetrahydrofuran may be used alone or in a combination thereof. Non-aqueous electrolytes and solid electrolytes of other various types may be used.

When a negative electrode is manufactured using a secondary battery negative electrode material obtained from the silicon oxide of the present invention, a conductive agent such as graphite may be added to the secondary battery negative electrode material. The type of conductive agent used herein is not particularly limited as long as it is an electronically conductive material which does not cause decomposition or alteration in a battery to be made. Specifically, a powder or a fiber of metal such as Al, Ti, Fe, Ni, Cu, Zn, Ag, Sn, and Si, natural graphite, artificial graphite, various coke powders, meso-phase carbon, a vapor phase grown carbon fiber, a pitch-based carbon fiber, a PAN-based carbon fiber, or graphite obtained by firing various resins may be used.

An electrochemical capacitor to be obtained has a feature of using the silicon oxide (active material) of the present invention for an electrode The materials for an electrolyte and a separator and a capacitor shape are not limited. For example, as the electrolyte, a non-aqueous solution containing a lithium salt such as lithium hexafluorophosphate, lithium perchlorate, lithium fluoroborate, and lithium hexafluoroarsenate is used. As a non-aqueous solvent, propylene carbonate, ethylene carbonate, dimethyl carbonate, diethyl carbonate, dimethoxyethane, γ-butyrolactone, or 2-methyltetrahydrofuran may be used alone or in a combination thereof. Non-aqueous electrolytes and solid electrolytes of other various types may be used.

In the lithium ion secondary battery and the electrochemical capacitor using the silicon oxide for a non-aqueous electrolyte secondary battery negative electrode material according to the present invention, battery characteristics such as capacity and cycle characteristics are excellent.

### EXAMPLES

Hereinafter, the present invention will be more specifically described with reference to Examples and Comparative Examples, but the present invention is not limited to these Examples.

### (Example 1)

A carbon-containing silicon oxide was manufactured using a horizontal tubular furnace 10 shown in FIG. 1. An alumina reaction tube 1 with an inner diameter of 80 mm was charged with 50 g of equimolar mixture of a metal silicon powder having an average particle diameter of 5 µm and a fumed silica powder (BET specific surface area: 200 m²/g) as a raw material 2.

Then the temperature of the raw material was increased to 1,400°C by a heater 6 at a temperature increasing rate of 300°C/h while a gas was exhausted by a vacuum pump 7 and the pressure in the furnace was reduced to 20 Pa or less. At the same time, a deposition portion in which a substrate for deposition 3 was disposed was heated by a heater for a deposition portion 8 and held at 700°C. When the temperature of the raw material reached 1,400°C, a CH₄ gas was introduced at a flow rate of 1 NL/min from a gas inlet tube 5 through a flow meter 4 (the pressure in the furnace was increased to 100 Pa). This operation was carried out for 3 hours. After that the introducing of CH₄ gas and the heater-heating were stopped, and the temperature was cooled to room temperature.

After the cooling, a deposit on the substrate for deposition 3 was recovered. The deposit was a black lump, and the recovery amount was 41 g.

Subsequently, 30 g of the deposit was subjected to dry milling in a 2L alumina ball mill to manufacture a silicon oxide for a non-aqueous electrolyte secondary battery negative electrode material.

The resultant silicon oxide was a powder having an average particle diameter of 7.5 µm, a BET specific surface area of 4.3 m²/g, and a carbon content of 5.3%.

### Evaluation of Battery

A battery using the processed powder of silicon oxide as a negative electrode active material was evaluated by the following method.

To the processed powder, 45% by weight of artificial graphite (average particle diameter: 10 µm) and 10% by weight of polyimide were added, and N-methylpyrrolidone was added to prepare a slurry. Then the slurry was applied to a copper foil with a thickness of 12 µm, dried at 80°C for 1 hour, and pressed by a roller to mold an electrode. The electrode was dried under vacuum at 350°C for 1 hour, and punched into 2 cm², to obtain a negative electrode.

For evaluation of the charge/discharge characteristics of the obtained negative electrode, a lithium ion secondary battery for evaluation was manufactured using a lithium foil as a counter electrode, a non-aqueous electrolyte solution obtained by dissolving lithium hexafluorophosphate in a 1/1 (volume ratio) mixture of ethylene carbonate and diethyl carbonate in a concentration of 1 mol/L as a non-aqueous electrolyte, and a microporous polyethylene film with a thickness of 30 µm as a separator.

The manufactured lithium ion secondary battery was held overnight at room temperature. After that the lithium ion secondary battery was charged at a constant current of 0.5 mA/cm² using a secondary battery charge and discharge tester (manufactured by Nagano Co., Ltd.) until the voltage of a test cell reached 0 V, and then charged at a reduced current so that the voltage of the test cell was maintained to 0 V. The charging was terminated when the current value was less than 40 µA/cm². The battery was discharged at a constant current of 0.5 mA/cm². The discharge was terminated when the cell voltage rose above 2.0 V. Then a discharge capacity was determined.

The above charge/discharge test was repeated, and the lithium ion secondary battery for evaluation after 200 cycles was subjected to the charge/discharge test. The lithium ion secondary battery had a first charge capacity of 1,440 mAh/g, a first discharge capacity of 1,090 mAh/g, a first charge/discharge efficiency of 75.7%, a 200th discharge capacity of 1,070 mAh/g, and a cycle retention rate after 200 cycles of 98%. Therefore, it was confirmed that the lithium ion secondary battery had a high capacity, excellent first charge/discharge efficiency, and excellent cycle characteristics.

### (Example 2)

A silicon oxide for a non-aqueous electrolyte secondary battery negative electrode material was manufactured in the same manner as in Example 1 except that an acetylene gas was used instead of a CH₄ gas and the temperature of the deposition portion was changed into 550°C.

The resultant silicon oxide was a powder having an average particle diameter of 7.6 µm, a BET specific surface area of 14.3 m²/g, and a carbon content of 2.2%.

Subsequently, a negative electrode was manufactured in the same manner as in Example 1, and the battery was evaluated in the same manner as in Example 1. The lithium ion secondary battery had a first charge capacity of 1,460 mAh/g, a first discharge capacity of 1,100 mAh/g, a first charge/discharge efficiency of 75.3%, a 200th discharge capacity of 1,080 mAh/g, and a cycle retention rate after 200 cycles of 98%. Therefore, it was confirmed that the lithium ion secondary battery had a high capacity, excellent first charge/discharge efficiency, and excellent cycle characteristics.

### (Example 3)

A silicon oxide for a non-aqueous electrolyte secondary battery negative electrode material was manufactured in the same manner as in Example 2 except that the amount of an acetylene gas was changed into 1.5 NL/min and the temperature of the deposition portion was changed into 1,000°C.

The resultant silicon oxide was a powder having an average particle diameter of 7.5 µm, a BET specific surface area of 2.8 m²/g, and a carbon content of 22.5%.

Subsequently, a negative electrode was manufactured in the same manner as in Example 1, and the battery was evaluated in the same manner as in Example 1. The lithium ion secondary battery had a first charge capacity of 1,320 mAh/g, a first discharge capacity of 1,020 mAh/g, a first charge/discharge efficiency of 77.3%, a 200th discharge capacity of 1,000 mAh/g, and a cycle retention rate after 200 cycles of 98%. The capacity of the battery decreased as compared with Examples 1 and 2, but it was confirmed that the lithium ion secondary battery had excellent first charge/discharge efficiency and excellent cycle characteristics.

### (Comparative Example 1)

A silicon oxide for a non-aqueous electrolyte secondary battery negative electrode material was manufactured in the same manner as in Example 1 except that a silicon oxide was deposited without supply of a carbon-containing gas.

The resultant silicon oxide was a powder having an average particle diameter of 7.6 µm and a BET specific surface area of 5.6 m²/g, and free of carbon.

Subsequently, a negative electrode was manufactured in the same manner as in Example 1, and the battery was evaluated in the same manner as in Example 1. The lithium ion secondary battery had a first charge capacity of 1,460 mAh/g, a first discharge capacity of 1,100 mAh/g, a first charge/discharge efficiency of 75.3%, a 200th discharge capacity of 990 mAh/g, and a cycle retention rate after 200 cycles of 90%. Therefore, it was confirmed that the cycle characteristics of the lithium ion secondary battery was deteriorated as compared with Examples 1 to 3.

### (Comparative Example 2)

A silicon oxide for a non-aqueous electrolyte secondary battery negative electrode material was manufactured in the same manner as in Example 2 except that the temperature of the deposition portion was changed into 450°C.

The resultant silicon oxide was a powder having an average particle diameter of 7.5 µm, a BET specific surface area of 34.2 m²/g, and a carbon content of 0.2%.

Subsequently, a negative electrode was manufactured in the same manner as in Example 1, and the battery was evaluated in the same manner as in Example 1. The lithium ion secondary battery had a first charge capacity of 1,410 mAh/g, a first discharge capacity of 1,060 mAh/g, a first charge/discharge efficiency of 75.1%, a 200th discharge capacity of 940 mAh/g, and a cycle retention after 200 cycles of 89%. Therefore, it was confirmed that the cycle characteristics of the lithium ion secondary battery was clearly deteriorated as compared with Examples 1 to 3.

### (Comparative Example 3)

A silicon oxide for a non-aqueous electrolyte secondary battery negative electrode material was manufactured in the same manner as in Example 2 except that the amount of an acetylene gas was changed into 2 NL/min and the temperature of the deposition portion was changed into 1,000°C.

The resultant silicon oxide was a powder having an average particle diameter of 7.5 µm, a BET specific surface area of 3.2 m²/g, and a carbon content of 33.4%.

Subsequently, a negative electrode was manufactured in the same manner as in Example 1, and the battery was evaluated in the same manner as in Example 1. The lithium ion secondary battery had a first charge capacity of 1,260 mAh/g, a first discharge capacity of 980 mAh/g, a first charge/discharge efficiency of 77.8%, a 200th discharge capacity of 960 mAh/g, and a cycle retention rate after 200 cycles of 98%. Therefore, it was confirmed that the capacity of the lithium ion secondary battery clearly decreased as compared with Examples 1 to 3.

### (Comparative Example 4)

A silicon oxide for a non-aqueous electrolyte secondary battery negative electrode material was manufactured in the same manner as in Example 1 except that the temperature of the deposition portion was changed into 1,150°C.

In the resultant silicon oxide, the average particle diameter was 7.5 µm and the BET specific surface area was 1.1 m²/g. From the X-ray diffraction analysis, the production of SiC was confirmed.

Subsequently, a negative electrode was manufactured in the same manner as in Example 1, and the battery was evaluated in the same manner as in Example 1. The lithium ion secondary battery had a first charge capacity of 1,300 mAh/g, a first discharge capacity of 950 mAh/g, a first charge/discharge efficiency of 73.2%, a 200th discharge capacity of 720 mAh/g, and a cycle retention rate after 200 cycles of 76%. Therefore, it was confirmed that the capacity of the lithium ion secondary battery clearly decreased, and the first charge/discharge efficiency and the cycle characteristics were clearly deteriorated, as compared with Examples 1 to 3.

## Claims

1. A silicon oxide for a non-aqueous electrolyte secondary battery negative electrode material, wherein the silicon oxide is a carbon-containing silicon oxide obtained by codeposition from a SiO gas and a carbon-containing gas, and the carbon-containing silicon oxide has a carbon content of 0.5 to 30% by mass.

2. The silicon oxide for a non-aqueous electrolyte secondary battery negative electrode material according to claim 1, wherein carbon in the carbon-containing silicon oxide is not converted into silicon carbide.

3. The silicon oxide for a non-aqueous electrolyte secondary battery negative electrode material according to claim 1 or claim 2, wherein the carbon-containing silicon oxide has an average particle diameter of 0.1 to 30 µm and a BET specific surface area of 0.5 to 30 m²/g.

4. A method for manufacturing a silicon oxide for a non-aqueous electrolyte secondary battery negative electrode material, comprising heating a raw material generating a SiO gas to generate a SiO gas, and supplying the generated SiO gas with a carbon-containing gas at a temperature of 500 to 1,100°C to deposit a carbon-containing silicon oxide having a carbon content of 0.5 to 30% by mass.

5. The method for manufacturing a silicon oxide for a non-aqueous electrolyte secondary battery negative electrode material according to claim 4, wherein the raw material generating a SiO gas is a mixture of a silicon oxide powder or a silicon dioxide powder with a metal silicon powder.

6. The method for manufacturing a silicon oxide for a non-aqueous electrolyte secondary battery negative electrode material according to claim 4 or claim 5, wherein the raw material generating a SiO gas is heated at a temperature of 1,100 to 1,600°C in the presence of an inert gas or under reduced pressure.

7. The method for manufacturing a silicon oxide for a non-aqueous electrolyte secondary battery negative electrode material according to any one of claims 4 to 6, wherein the carbon-containing gas is a hydrocarbon gas represented by CₙH₂ₙ₊₂, wherein "n" represents 1 to 3.

8. A lithium ion secondary battery, wherein the lithium ion secondary battery uses the silicon oxide for a non-aqueous electrolyte secondary battery negative electrode material according to any one of claims 1 to 3.

9. An electrochemical capacitor, wherein the electrochemical capacitor uses the silicon oxide for a non-aqueous electrolyte secondary battery negative electrode material according to any one of claims 1 to 3.

## Patentansprüche

1. Siliziumoxid für ein Negativelektrodenmaterial einer Sekundärbatterie mit einem nicht-wässrigen Elektrolyten, wobei das Siliziumoxid ein Kohlenstoff-enthaltendes Siliziumoxid ist, das durch die Mitabscheidung eines SiO Gases und eines Kohlenstoff-enthaltenden Gases erhalten ist, und wobei das Kohlenstoff-enthaltende Siliziumoxid einen Kohlenstoffgehalt von 0,5 bis 30 %, bezogen auf die Masse, aufweist.

2. Siliziumoxid für ein Negativelektrodenmaterial einer Sekundärbatterie mit einem nicht-wässrigen Elektrolyten nach Anspruch 1, wobei der Kohlenstoff in dem Kohlenstoff-enthaltenden Siliziumoxid nicht in Siliziumcarbid umgewandelt ist.

3. Siliziumoxid für ein Negativelektrodenmaterial einer Sekundärbatterie mit einem nicht-wässrigen Elektrolyten nach Anspruch 1 oder Anspruch 2, wobei das Kohlenstoff-enthaltende Siliziumoxid einen durchschnittliche Partikeldurchmesser von 0,1 bis 30 µm und eine spezifische BET-Fläche von 0,5 bis 30 m²/g aufweist.

4. Verfahren zum Herstellen eines Siliziumoxids für ein Negativelektrodenmaterial einer Sekundärbatterie mit einem nicht-wässrigen Elektrolyten, umfassend Erhitzen eines Rohmaterials, das ein SiO Gas erzeugt, zum Erzeugen eines SiO Gases, und Zuführen des erzeugten SiO Gases mit einem Kohlenstoff-enthaltenden Gas bei einer Temperatur von 500 bis 1100°C, um ein Kohlenstoff-enthaltendes Siliziumoxid mit einem Kohlenstoffgehalt von 0,5 bis 30%, bezogen auf die Masse, abzulagern.

5. Verfahren zum Herstellen eines Siliziumoxids für ein Negativelektrodenmaterial einer Sekundärbatterie mit einem nicht-wässrigen Elektrolyten nach Anspruch 4, wobei das Rohmaterial, das ein SiO Gas erzeugt, eine Mischung ist aus einem Siliziumoxidpulver oder einem Siliziumdioxidpulver mit einem Metallsiliziumpulver.

6. Verfahren zum Herstellen eines Siliziumoxids für ein Negativelektrodenmaterial einer Sekundärbatterie mit einem nicht-wässrigen Elektrolyten nach Anspruch 4 oder Anspruch 5, wobei das Rohmaterial, welches ein SiO Gas erzeugt, bei einer Temperatur von 1100 bis 1600°C in der Gegenwart eines Inertgases oder unter reduziertem Druck erhitzt wird.

7. Verfahren zum Herstellen eines Siliziumoxids für ein Negativelektrodenmaterial einer Sekundärbatterie mit einem nicht-wässrigen Elektrolyten nach einem beliebigen der Ansprüche 4 bis 6, wobei das Kohlenstoff-enthaltende Gas ein Kohlenwasserstoffgas ist, das durch CₙH₂ₙ₊₂ dargestellt ist, wobei "n" 1 bis 3 darstellt.

8. Lithiumionen-Sekundärbatterie, wobei die Lithiumionen-Sekundärbatterie das Siliziumoxid für ein Negativelektrodenmaterial einer Sekundärbatterie mit einem nicht-wässrigen Elektrolyten gemäß einem beliebigen der Ansprüche 1 bis 3 verwendet.

9. Elektrochemischer Kondensator, wobei der elektrochemische Kondensator das Siliziumoxid für ein Negativelektrodenmaterial einer Sekundärbatterie mit einem nicht-wässrigen Elektrolyten gemäß einem beliebigen der Ansprüche 1 bis 3 verwendet.

## Revendications

1. Oxyde de silicium pour un matériau d'électrode négative de batterie secondaire à électrolyte non aqueux, dans lequel l'oxyde de silicium est un oxyde de silicium contenant du carbone obtenu par dépôt simultané à partir d'un gaz de SiO et d'un gaz contenant du carbone, et l'oxyde de silicium contenant du carbone a une teneur en carbone de 0,5 à 30 % en masse.

2. Oxyde de silicium pour un matériau d'électrode négative de batterie secondaire à électrolyte non aqueux selon la revendication 1, dans lequel le carbone dans l'oxyde de silicium contenant du carbone n'est pas converti en carbure de silicium.

3. Oxyde de silicium pour un matériau d'électrode négative de batterie secondaire à électrolyte non aqueux selon la revendication 1 ou la revendication 2, dans lequel l'oxyde de silicium contenant du carbone a un diamètre moyen de particule de 0,1 à 30 µm et une surface spécifique BET de 0,5 à 30 m²/g.

4. Procédé de fabrication d'un oxyde de silicium pour un matériau d'électrode négative de batterie secondaire à électrolyte non aqueux, comprenant le chauffage d'une matière première générant un gaz de SiO pour générer un gaz de SiO, et l'alimentation du gaz de SiO généré avec un gaz contenant du carbone à un température de 500 à 1 100 °C pour déposer un oxyde de silicium contenant du carbone ayant une teneur en carbone de 0,5 à 30 % en masse.

5. Procédé de fabrication d'un oxyde de silicium pour un matériau d'électrode négative de batterie secondaire à électrolyte non aqueux selon la revendication 4, dans lequel la matière première générant un gaz de SiO est un mélange d'une poudre d'oxyde de silicium ou d'une poudre de dioxyde de silicium avec une poudre de silicium métallique.

6. Procédé de fabrication d'un oxyde de silicium pour un matériau d'électrode négative de batterie secondaire à électrolyte non aqueux selon la revendication 4 ou la revendication 5, dans lequel la matière première générant un gaz de SiO est chauffée à une température de 1 100 à 1 600 °C en présence d'un gaz inerte ou sous pression réduite.

7. Procédé de fabrication d'un oxyde de silicium pour un matériau d'électrode négative de batterie secondaire à électrolyte non aqueux selon l'une quelconque des revendications 4 à 6, dans lequel le gaz contenant du carbone est un gaz hydrocarboné représenté par CₙH₂ₙ₊₂, dans lequel « n » représente 1 à 3.

8. Batterie secondaire au lithium-ion, dans laquelle la batterie secondaire au lithium-ion utilise l'oxyde de silicium pour un matériau d'électrode négative de batterie secondaire à électrolyte non aqueux selon l'une quelconque des revendications 1 à 3.

9. Condensateur électrochimique, dans lequel le condensateur électrochimique utilise l'oxyde de silicium pour un matériau d'électrode négative de batterie secondaire à électrolyte non aqueux selon l'une quelconque des revendications 1 à 3.
